# EUROPÄISCHE PATENTSCHRIFT

(11) **EP 1 878 674 B1**
(45) Veröffentlichungstag und Bekanntmachung des Hinweises auf die Patenterteilung: **28.10.2009**
(21) Anmeldenummer: 06014463.1
(22) Anmeldetag: 12.07.2006
(51) Int. Cl.: B65G 21/20

(54) **Kettenglied für eine umlaufende Transportkette einer Werkzeugmaschine, sowie Doppelendprofiler mit aus solchen Kettengliedern gebildeten Führungsketten**
Chain link for the conveyor chain of a machine tool and a double end profiler with chains having such chain links
Maillon pour chaîne de transport pour une machine-outil et une machine à profiler à deux bouts avec des chaînes à partir de ce maillon

(43) Veröffentlichungstag der Anmeldung: 16.01.2008
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE)
(74) Vertreter: HOFFMANN EITLE

(56) Entgegenhaltungen:
- EP-A- 0 366 170
- EP-A- 1 479 944
- EP-A- 1 595 825
- WO-A-2004/052759
- DE-U1-202004 020 855
- DE-U1-202004 020 943

## Beschreibung

### TECHNISCHES GEBIET

Die vorliegende Erfindung betrifft ein Kettenglied für eine endlos umlaufende Werkstücktransportkette, sowie einen in der spanenden Bearbeitung von plattenförmigen Werkstücken aus Holz, Kunststoff oder vergleichbaren Werkstoffen eingesetzten Durchlaufmaschinen, beispielsweise Doppelendprofiler mit einer oder zwei aus solchen Kettengliedern ausgebildeten Führungsketten als umlaufende Werkstückauflage.

### STAND DER TECHNIK

Die EP 1 479 944 A2 (Siemens Aktiengesellschaft) offenbart eine Führung für eine umlaufende, aus einzelnen Kettengliedern aufgebaute Transportkette. In diesem Stand der Technik ist als Problem identifiziert worden, dass aufgrund einer Federvorspannung bei vorbekannten Ketten Vibrationen bzw. Schwingungen auftreten, die sich hinsichtlich Stoßsowie einher gehender Geräuschentwicklung und Verschleiß an den Ketten sowie ihren Umlenkungen nachteilig bemerkbar machen. Zur Reduzierung bzw. Vermeidung dieser Probleme wird vorgeschlagen, Mittel zur Erzeugung eines magnetischen Feldes zur Ausübung einer magnetischen Kraft auf die Transportkette so vorzusehen, dass die Transportkette an ihre Führungseinrichtung entweder gedrückt oder gezogen wird. Die Führung umfasst dabei Führungsstege, auf denen sich Führungsräder bzw. Laufrollen der Kettenglieder abwälzen, und die so eine Laufbahn bilden. Um die magnetische Kraft zu erzeugen, wird nun ein magnetischer Kreis gebildet, indem die Führungsstege an einer Seite in ihrer Breite reduziert werden. So können sie dort, also seitlich, Magnete aufnehmen. Hierbei soll ein möglichst großer Teil der Laufbahnbreite erhalten bleiben. Die sich ergebende Magnetkraft wirkt achsparallel auf die Führungsräder bzw. Laufrollen, wobei diese die Laufbahn nur linienförmig berühren. Es ergibt sich eine Magnetkraftrichtung, die hinsichtlich ihrer Schwingungsdämpfung unangemessen ist. Im Übrigen hat sich gezeigt, dass das Vorsehen der Magnete im Bereich der Spalte zwischen Führungsrädern und Laufbahn im Dauerbetrieb in den Spalten zu verstärktem Passungsrost führt (auch Reibkorrosion genannt), was einen häufigeren Austausch der betroffenen Bauteile notwendig macht. Dies hilft dem ursprünglich angesprochenen Nachteil des Verschleißes, und dem einher gehenden Austausch der verschlissenen Bauteile, nur auf unbefriedigende Weise ab.

Der Stand der Technik nach der DE 10 2004 023 494 A1 bzw. der EP 1 595 825 A2 (Homag Holzbearbeitungssysteme AG) bietet dem gegenüber bereits eine verbesserte Lösung. Er spricht Holzbearbeitungsmaschinen mit Hochgeschwindigkeitstransportketten an und stellt sich zur Aufgabe, für solche Maschinen eine Kettenführung zu schaffen, bei der die magnetischen Kräfte eine gute Schwingungsdämpfung erreichen. Zu diesem Zweck soll die Kettenführung so ausgestaltet werden, dass die im Luftspalt wirkenden Magnetkräfte in im Wesentlichen orthogonaler Richtung zu den Laufbahnen der Führungsstege für die Führungsräder bzw. Laufrollen der Kettenglieder wirken. Dadurch soll ein Abheben der Kettenglieder von der Laufbahn wirkungsvoller verhindert werden, was hier als ursächlich für den schon in der EP 1 479 944 A2 identifizierten Verschleiß gehalten wird. Erreicht werden kann diese Kraftrichtung durch Anordnen der Magnete nicht an den die Laufbahn bildenden Führungsstegen, sondern am Grund des durch sie gebildeten Nutprofils. So wirken die Magnete über eine auf einem Achsbolzen unter den Laufrollen befestigte Querführungsrolle. Aber auch in der Lösung nach der DE 10 2004 023 494 A1 schließt sich der Magnetkreis über eine linienförmige Berührung, hier zwischen der Querführungsrolle und den Innenseiten der Tragschienen genannten Führungsstege oder am Außenumfang der Achsbolzenstirnseite. Zudem ist die Lösung nach der DE 10 2004 023 494 A1 darauf angewiesen, dass ein Nutprofil vorhanden ist.

Aus den nebengeordneten Ansprüchen offenbart die EP 1 595 825 A2 folgende Merkmale: ein Kettenglied für eine umlaufende Transportkette einer Werkzeugmaschine mit einem Paar Laufrollen, die über ihre Abwälzrichtung die Umlaufrichtung des Kettenglieds bestimmen, oberhalb der Laufrollen eine Werkstückauflage und bei Befestigung an einem benachbarten Kettenglied ein weiteres Laufrollenpaar, das in Umlaufrichtung des Kettegliedes von dem ersten Laufrollenpaar beabstandet ist und zusammen mit ihm eine Ebene aufspannt. Das Kettenglied umfasst ferner eine Querführung in Form einer Querführungsrolle, die das Kettenglied quer zu seiner Umlaufrichtung führt und auf einem Achsbolzen gelagert ist, der sich quer zur Umlaufrichtung des Kettenglieds gesehen zwischen den Laufrollen der Laufrollenpaare befindet. Dieser Achsbolzen ist aus ferromagnetischem Werkstoff und bildet eine Fläche, die im Wesentlichen parallel zu der durch die Laufrollenpaare aufgespannten Ebene und so von dieser Ebene beabstandet ist, dass sich im Betrieb der Transportkette dort mit am Grund eines Nutprofils in der Kettenführung angeordneten Magneten ein flächiger Luftspalt bildet.

### ZU GRUNDE LIEGENDES PROBLEM

Von diesem Stand der Technik ausgehend liegt der vorliegenden Erfindung als technisches Problem zu Grunde, für Hochgeschwindigkeitstransportketten von Holzbearbeitungsmaschinen eine Lösung mit hinsichtlich der erzeugten Magnetkraft verbessertem Magnetfluss und reduziertem Risiko von Passungsrost bereit zu stellen.

### DARSTELLUNG DER ERFINDUNG

Dieses technische Problem wird gelöst durch Kettenglieder mit den Merkmalen von Anspruch 1 und/oder 4, sowie durch eine Durchlaufmaschine, bevorzugt einen Doppelendprofiler mit den Merkmalen von Anspruch 12. Vorteilhafte Weiterbildungen sind in den Unteransprüchen angegeben.

So umfasst das erfindungsgemäße Kettenglied ein Paar Laufrollen, die über ihre Abwälzrichtung an typischerweise einer Kettenführung einer Werkzeugmaschine die Umlaufrichtung des Kettengliedes bestimmen. Die als Werkstückauflage umlaufende Transportkette läuft dabei in einer Ebene um, die rechtwinklig zur Transportebene des Werkstücks ist. Unter Werkzeugmaschinen werden hier Maschinen zur Bearbeitung von Werkstoffen wie Holz, Kunststoff, Aluminium oder bezüglich ihrer Werkzeugbelastung vergleichbaren Werkstoffen verstanden, ungeachtet dessen, ob es sich um Stationärbearbeitung oder Bearbeitung im Durchlauf handelt.

Oberhalb der Laufrollen ist eine Werkstückauflage vorgesehen. Mindestens eine weitere Laufrolle ist in Umlaufrichtung des Kettengliedes, also gewissermaßen von vorne nach hinten, von dem Laufrollenpaar beabstandet. So sorgen die Laufrollen für Stabilität gegen Kippen um die Querachse. Über ihre Abwälzung spannt die mindestens eine weitere Laufrolle mit dem Laufrollenpaar eine Ebene auf, die als Bezugsebene für die Anordnung einer oder mehrerer Flächen zur Ausbildung eines verbesserten Luftspalts dient. Eine Führung, die das Kettenglied quer zu seiner Umlaufrichtung führt, ist ebenfalls vorgesehen. Sie kann eine Querführungsrolle aufweisen oder quer zur Umlaufrichtung des Kettengliedes zwischen dem Laufrollenpaar rollenfrei sein.

In Umlaufrichtung betrachtet ist bei rollenfreier Querführung zwischen dem Laufrollenpaar und der mindestens einen weiteren Laufrolle ein ferromagnetischer Werkstoff vorgesehen, der am Boden des Kettenglieds eine Fläche bildet, die im Wesentlichen parallel zu der durch die Laufrollen aufgespannten Ebene und von dieser Ebene derart beabstandet ist, dass sich im Betrieb der Transportkette dort ein flächiger Luftspalt bildet. Bei einer Kettenführung ohne eine Führungsnut ist die Fläche geringfügig nach oben beabstandet, um mit der im Einsatz des Ketteglieds benachbarten Fläche der Kettenführung einen engen, flächigen, parallelen Luftspalt auszubilden. Diese Ausgestaltung bietet sich an, wenn als Querführung keine Rolle, sondern beispielsweise ein Schwert vorgesehen ist.

Alternativ ist bei Vorhandensein einer Querführungsrolle in Umlaufrichtung betrachtet zwischen den Laufrollenpaaren ein ferromagnetischer Werkstoff vorgesehen, der mindestens eine Fläche bildet, die von der Stirnfläche des Achsbolzens für die Querführungsrolle entfernt, im Wesentlichen parallel zu der durch die Laufrollen aufgespannten Ebene und von dieser Ebene derart beabstandet ist, dass sich im Betrieb der Transportkette dort ein flächiger Luftspalt bildet. Diese Fläche oder Flächen können in Umlaufrichtung von dem Achsbolzen beabstandet sein, sie können ihn aber auch radial umgeben, sind aber von ihm entfernt, so dass auch jeweils an der Stirnfläche des Achsbolzens ein flächiger paralleler Luftspalt gebildet wird. Dennoch wird der Luftspalt räumlich von den Stellen getrennt, wo die Kettenglieder sich abwälzen, was das Bilden von Passungsrost verringert.

Erfindungsgemäß werden die Kettenglieder der vorliegenden Erfindung bei Durchlaufmaschinen eingesetzt wegen der bei diesen im Vordergrund stehenden Serienfertigung, den hohen Durchlaufgeschwindigkeiten der Werkstücke durch die Maschine und dem zuvor als groß angesehenen Einfluss der unteren, umlaufenden Werkstückauflage auf die Qualität der Bearbeitung. Die als Werkstückauflage umlaufende Transportkette läuft auch hier in einer Ebene um, die rechtwinklig zur Transportebene des Werkstücks ist. Mit Hilfe der Erfindung lassen sich die zuvor gestellten Anforderungen eines synchronen Laufs der Auflage bzw. der rechten und linken Auflagen reduzieren. Bei verbessertem Schwingungsverhalten kommt auch der Synchronisierung von rechter und linker Auflage verringerte Bedeutung zu, solange die Parallelität beim Werkstücktransport gewahrt bleibt. Dies macht sich u.a. vorteilhaft bemerkbar beim Bearbeiten von Werkstücken mittels Ink-Jet Drucken, so dass dann, wenn die erfindungsgemäßen Kettenglieder für die Werkstückförderung bei Ink-Jet oder anderen Druckstationen zum Einsatz kommen, die Rasterhaltigkeit beim Druck gut gewährleistet ist.

### KURZE BESCHREIBUNG DER ZEICHNUNGEN

- Abb. 1: zeigt ein erstes Ausführungsbeispiel, wobei
- Abb. 1.1: es in der Druntersicht zeigt, und zur Vereinfachung der Darstellung die Laufrollen weggelassen wurden.
- Abb. 1.2: zeigt das erste Ausführungsbeispiel in einer Stirnansicht.
- Abb. 1.3: zeigt das erste Ausführungsbeispiel mit Laufrollen in einer Seitenansicht, wobei das erfindungsgemäße Kettenglied teilweise aufgebrochen ist, um die Befestigung einer Querführungsrolle auf ihrem Achsbolzen und die Befestigung des Achsbolzens in dem erfindungsgemäßen Kettenglied zu zeigen.
- Abb. 1.4: zeigt das erfindungsgemäße Kettenglied des ersten Ausführungsbeispiels entlang der Schnittlinie A-A aus Abb. 1.3 im Zusammenwirken mit der Kettenführung einer Werkzeugmaschine sowie das dort angebrachte Magnetpaket.
- Abb. 2: zeigt ein zweites Ausführungsbeispiel, wobei
- Abb. 2.1: das zweite Ausführungsbeispiel in der Druntersicht zeigt, wobei zur Vereinfachung der Darstellung die Laufrollen weggelassen wurden.
- Abb. 2.2: zeigt das zweite Ausführungsbeispiel in einer Stirnansicht.
- Abb. 2.3: zeigt das zweite Ausführungsbeispiel in einer Seitenansicht, wobei hier die Laufrollen dargestellt sind.
- Abb. 2.4: zeigt das erfindungsgemäße Kettenglied des zweiten Ausführungsbeispiels in der Schnittebene der Querführungsrolle, entlang der Schnittlinie A-A aus Abb. 2.3, im Zusammenwirken mit der Kettenführung einer Werkzeugmaschine.
- Abb. 2.5: zeigt eine Schnittansicht entlang der Schnittlinie B-B in Abb. 2.3 mit an dem erfindungsgemäßen Kettenglied angebrachtem Permanentmagnet.
- Abb. 3: zeigt ein drittes Ausführungsbeispiel, wobei
- Abb. 3.1: das dritte Ausführungsbeispiel in der Druntersicht zeigt, und zur Vereinfachung der Darstellung die Laufrollen weggelassen wurden.
- Abb. 3.2: zeigt das dritte Ausführungsbeispiel in einer Stirnansicht.
- Abb. 3.3: zeigt das dritte Ausführungsbeispiel in einer Seitenansicht, wobei hier die Laufrollen dargestellt sind.
- Abb. 3.4: zeigt die dritte Ausführungsform des erfindungsgemäßen Kettengliedes im Querschnitt, entlang der Schnittlinie A-A in Abb. 3.3, und insbesondere die Möglichkeiten zum Schließen eines magnetischen Kreises.
- Abb. 3.5: zeigt das dritte Ausführungsbeispiel der erfindungsgemäßen Kettengliedes im Schnitt entlang der Linie B-B in Abb. 3.3, wobei zur Verdeutlichung der Steg aus Abb. 3.3 weggelassen wurde.
- Abb. 3.6: zeigt den gleichen Schnittlinienverlauf wie Abb. 3.5, allerdings mit Steg. Zur Verdeutlichung wurden die Linien für den magnetischen Fluss über die Luftspalte hinweg eingezeichnet.
- Abb. 4: zeigt ein viertes Ausführungsbeispiel, wobei
- Abb. 4.1: das vierte Ausführungsbeispiel in der Druntersicht zeigt, und zur Vereinfachung der Darstellung die Laufrollen weggelassen wurden.
- Abb. 4.2: zeigt das vierte Ausführungsbeispiel in einer Stirnansicht.
- Abb. 4.3: zeigt das vierte Ausführungsbeispiel in einer Seitenansicht mit Laufrollen.
- Abb. 4.4: zeigt das erfindungsgemäße Kettenglied nach dem vierten Ausführungsbeispiel entlang der Schnittlinie A-A aus Abb. 4.3 im Zusammenwirken mit der Kettenführung einer Werkzeugmaschine sowie den dort angebrachten Magneten.
- Abb. 5: zeigt eine fünfte Ausführung, die nicht Teil der vorliegend beanspruchten Erfindung ist, wobei
- Abb. 5.1: sie in der Druntersicht mit Laufrollen zeigt.
- Abb. 5.2: zeigt die fünfte Ausführung in einer Stirnansicht.
- Abb. 5.3: zeigt die fünfte Ausführung in einer Seitenansicht.
- Abb. 5.4: zeigt das Kettenglied nach der fünften Ausführung entlang der Schnittlinie A-A aus Abb. 5.3 im Zusammenwirken mit der Kettenführung einer Werkzeugmaschine sowie den dort angebrachten Magneten.
- Abb. 6: zeigt ein sechstes Ausführungsbeispiel, wobei
- Abb. 6.1: das sechste Ausführungsbeispiel in der Druntersicht zeigt, und zur Vereinfachung der Darstellung die Laufrollen weggelassen wurden.
- Abb. 6.2: zeigt das sechste Ausführungsbeispiel in einer Stirnansicht.
- Abb. 6.3: zeigt das sechste Ausführungsbeispiel in einer Seitenansicht, wobei hier die Laufrollen dargestellt sind.
- Abb. 6.4: zeigt das erfindungsgemäße Kettenglied nach dem sechsten Ausführungsbeispiel entlang der Schnittlinie A-A aus Abb. 6.3 im Zusammenwirken mit der Kettenführung einer Werkzeugmaschine sowie den dort angebrachten Magneten.
- Abb. 6.5: zeigt eine schematische Draufsicht auf einen Teilbereich der Kettenführung aus Abb. 6.4.

### AUSFÜHRLICHE BESCHREIBUNG BEVORZUGTER AUSFÜHRUNGSFORMEN

Bevorzugte Ausführungen der vorliegenden Erfindung werden nachfolgend ausführlich unter Bezugnahme auf die begleitenden Zeichnungen beschrieben. Durch alle Ausführungsformen hindurch werden gleiche oder ähnliche Bezugszeichen für die gleichen oder ähnlichen Bauteile verwendet. Eine Beschreibung gleicher oder ähnlicher Bauteile wird nur einmal gegeben, und soll für alle Ausführungsformen gelten, soweit keine abweichende Beschreibung gegeben ist.

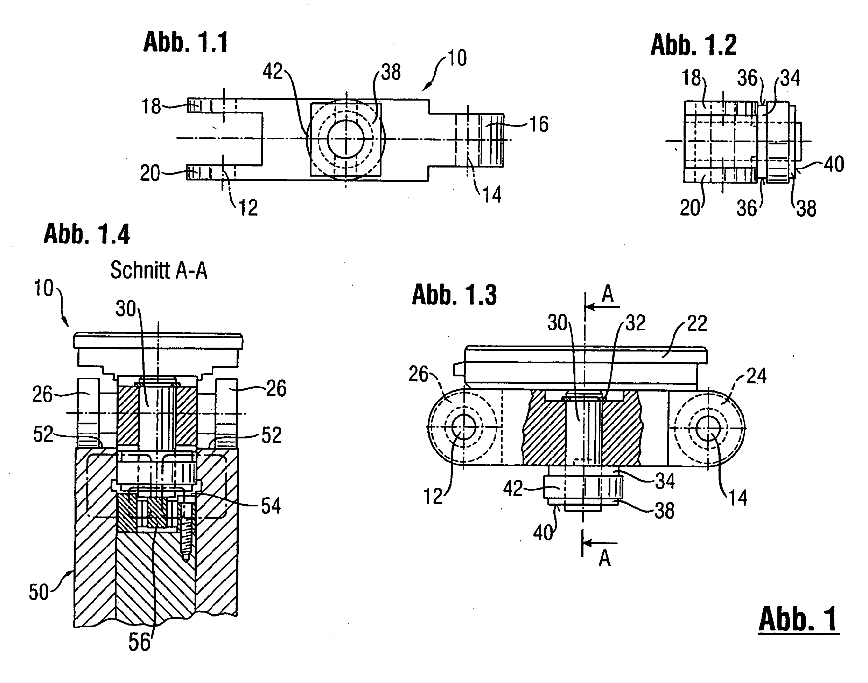

Abb. 1 zeigt die erste Ausführungsform. Abb. 1.1 zeigt eine Druntersicht, aus der bei 10 allgemein das Kettenglied erkennbar ist. Laufrollenachsen 12 und 14 erstrecken sich quer zur Längserstreckung des Kettenglieds 10 und sind hier nur schematisch dargestellt. Um eine Verbindung benachbarter Kettenglieder zu gewährleisten, und so die Kette zu bilden, weist das Kettenglied 10 auf allgemein bekannte Weise an einem Ende einen Achsträger 16 auf, und an dem anderen Ende zwei Achsträgerzapfen 18, 20. Die Achsträgerzapfen 18, 20 greifen um den Achsträger 16 eines benachbarten Kettengliedes, woraufhin über eine Achse oder Welle für die Laufrollen 24, 26 (Abb. 1.3) benachbarte Kettenglieder aneinander befestigt werden.

Abb. 1.2 zeigt eine Vorderansicht des Kettengliedes 10, aus der ebenfalls die Achsträgerzapfen 18, 20 entnehmbar sind. Die Laufrollen 24, 26 und die Werkstückauflage 22 gehen aus Abb. 1.3 hervor, die eine Seitenansicht des in Abb. 1.1 dargestellten Kettengliedes zeigt. Die Werkstückauflage 22 liegt oberhalb von den Laufrollenachsen 12, 14, hier gemäß der bevorzugten Ausführungsform sogar über den kompletten Laufrollen 24, 26. In der Abb. 1.3 ist die Werkstückauflage 22 relativ zu den Laufrollen 24, 26 somit nach "oben" beabstandet. Die in Abb. 1.3 dargestellte Lage entspricht der Lage des Kettengliedes im oberen Kettentrum, während der Förderung des Werkstückes auf mehreren Werkstückauflagen 22 benachbarter Kettenglieder 10. Diese Orientierung und Lage des Kettengliedes wird vorliegend zur einfacheren Bezugnahme auf die Richtungen verwendet, so dass nach "oben" z.B. eine Orientierung in Richtung der Werkstückauflage bedeutet. Richtungsangaben wie beispielsweise "oben" oder "unten", "vorne" oder "hinten" sollen jedoch keine absolute Orientierung vorschreiben.

Die Linienberührung aller vier Laufrollen 24, 26 nach unten, d.h. im typischen Einsatz der Kettenglieder die Linienberührung auf den Kettenführungen 52, spannt eine Ebene auf, die als Bezugsebene für die Ausbildung der Luftspalte genutzt wird. Ferner gibt die Abwälzung der Laufrollen 24, 26 die Umlaufrichtung des Kettengliedes vor.

Die Seitenansicht des Kettengliedes 10 in Abb. 1.3 ist teilweise aufgebrochen. Aus dem Aufbruch geht hervor, dass ein Achsbolzen 30 für eine Querführungsrolle in das Kettenglied 10 eingesetzt ist. Der Achsbolzen kann vor der Montage der Werkstückauflage 22 von oben oder alternativ von unten montiert werden. Im dargestellten Ausführungsbeispiel ist für die Befestigung des Achsbolzens ein Sprengring 32 dargestellt, andere Befestigungen sind aber möglich. Der Achsbolzen 30 verfügt über eine obere Achsbolzenaufweitung 34 und eine untere Achsbolzenaufweitung 38. Je nach Befestigung für den Achsbolzen 30 im Kettenglied 10 kann entweder die untere Achsbolzenaufweitung 38 oder die obere Achsbolzenaufweitung 34 auch einstückig mit dem Achsbolzen 30 ausgebildet sein. Es ist ebenfalls möglich, beide Aufweitungen 34, 38 als getrennte Bauteile vorzusehen und sie dann drehfest auf dem Achsbolzen 30 zu befestigen.

Obwohl dies nicht ausführlich dargestellt ist, ist bevorzugt auch der Achsbolzen 30 drehfest im Kettenglied 10 aufgenommen, beispielsweise über einen Formschluss mittels einer Keilverbindung oder einem unrunden Querschnitt in seinem oberen Bereich. Die drehfeste Aufnahme des Achsbolzens 30 in Verbindung mit der drehfesten Befestigung der Aufweitungen 34, 38 verhindert, dass sich die Achsbolzenaufweitungen relativ zum Kettenglied verdrehen.

Die Achsbolzenaufweitungen 34, 38 stellen Flächen bereit, an denen sich im Betrieb der Kette ein Luftspalt ausbildet. Die Flächen der oberen Achsbolzenaufweitung 34, an denen sich der Luftspalt ausbildet, sind mit 36 bezeichnet, die der unteren Achsbolzenaufweitung 38 mit 40. Zur einfacheren Bezugnahme werden vorliegend Flächen, an denen sich im Betrieb der Kettenglieder ein Luftspalt ausbildet, mit Luftspaltflächen bezeichnet. Die Achsbolzenaufweitungen 34, 38 sind aus einem ferromagnetischen Werkstoff gebildet, um die Feldlinien zu leiten und zu bündeln und somit die auf das Kettenglied ausgeübte Magnetkraft zu erhöhen. Als ferromagnetischer Werkstoff bevorzugt ist der Werkzeugstahl C45Pb nach DIN EN ISO 4957, obwohl auch andere Werkstoffe mit Eisen-, Nickel- oder Kobaltanteilen denkbar sind.

Aus den Abbildungen, insbesondere aus Abb. 1.1, geht hervor, dass die vom Achsbolzen 30 getragene Querführungsrolle 42 geringfügig über die Achsbolzenaufweitungen 34, 38 vorsteht. Dies gewährleistet, dass die Querführungsrolle 42 sich in der Kettenführung abwälzen und so ihre Querführungsfunktion übernehmen kann, ohne dass die drehfest an dem Kettenglied befestigten Achsbolzenaufweitungen 34, 38 mit der Kettenführung kollidieren würden. Dennoch ist der Überstand der Querführungsrolle so gering, dass sich an den Luftspaltflächen 36, 40 ein nur geringer Spalt ausbildet, über den sich ein Magnetkreis ohne Weiteres schließen kann. Der Überstand und somit der Luftspalt beträgt zwischen 0,5 und 2 mm bevorzugt ca. 1,5 mm und weiter bevorzugt 1,4 mm, was bei üblichen Magneten eine Anziehungskraft von rund 100 N ergibt.

Die Einbausituation des Kettengliedes in der Kettenführung 50 ist in Abb. 1.4 dargestellt, die eine Schnittansicht durch die Mittelachse des Achsbolzens 30 gemäß dem Schnittlinienverlauf A-A in Abb. 1.3 zeigt.

In Abb. 1.4 ist die Kettenführung 50 dargestellt, die hier zwei Führungsbahnen 52 aufweist. Zwischen den Führungsbahnen ist eine Führungsnut 54 ausgebildet, an deren Grund Magnetpakete 56 angeordnet sind. Im vorliegenden Ausführungsbeispiel sind die Magnetpakete nach unten in den Nutgrund verschraubt, es ist aber auch eine seitliche Verschraubung in oder durch die Führungsbahnen 52 oder eine andere Befestigung denkbar, wobei zwischen den Magnetpaketen 56 und dem Nutgrund durchaus ein geringer Abstand vorgegeben sein kann.

Abb. 1 zeigt, dass die Luftspaltfläche 40 von dem Achsbolzen 30, konkret von dessen Stirnfläche, entfernt liegt. Sie umgibt den Achsbolzen und die Stirnfläche radial. Gleichzeitig liegt sie parallel zur Ebene, die von den Berührungen der Laufrollenpaare auf ihren Kettenführungen aufgespannt wird. Bei 36 sind weitere Luftspaltflächen ausgebildet, die zu der Fläche 40 senkrecht stehen und parallel zur Umlaufrichtung des Kettenglieds verlaufen. Alle drei Flächen 36, 40 bilden bei der typischen Ausgestaltung der Kettenführung einen engen, flächigen und planparallelen Luftspalt.

Aus der Schnittansicht nach Abb. 1.4 ist erkennbar, dass die Querführungsrolle 42 sich an den inneren Seitenflächen der Führungsbahn 52 abwälzt. Eine Querbewegung des Kettengliedes 10 relativ zur Kettenführung 50 ist somit unterbunden, was auf bekannte Art und Weise einen präzisen und wiederholbaren Werkstücktransport sicherstellt. Aus Abb. 1.4 ist ferner durch die Darstellung in strichpunktierten Linien entnehmbar, wie sich der Magnetkreis über die Luftspaltflächen 36, 40 schließt. So werden die Magnetkreise über die Magnete und die untere Achsbolzenaufweitung einerseits bzw. die Magnete und die obere Achsbolzenaufweitung 34 und die Führungsbahnen 52 andererseits geschlossen. Im Gegensatz zum Stand der Technik ist es hier nicht mehr erforderlich, dass sich der Magnetkreis über eine linienförmige Berührung bei der Abwälzung von der Querführungsrolle 42 an den Führungsbahnen 52 schließt. Vielmehr ist hier ein flächiger Übertritt der Magnetfeldlinien an einem engen, parallelen Spalt verwirklicht, was den Wirkungsgrad erhöht. Dies ermöglicht es, eine qualitativ gleichwertige Führungsfunktion bei geringerer Magnetkraft der Magnete zu erzielen. Die Fertigungskosten können gesenkt werden und die Handhabung der Magnete bei der Montage wird vereinfacht. Durch Entkoppeln des Magnetkreises von den Stellen hoher mechanischer Belastung kann die Ausbildung von Passungsrost gesenkt werden.

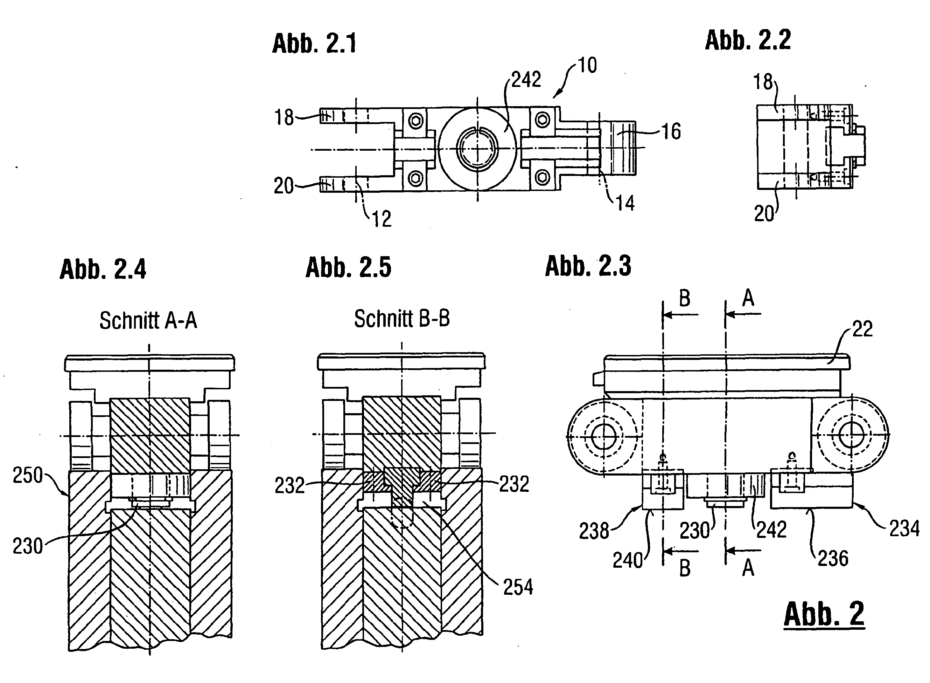

Abb. 2 zeigt eine zweite Ausführungsform, wobei die Ansichten der Abb. 2.1, 2.2, 2.3 denen der Abb. 1.1, 1.2 und 1.3 entsprechen. Abb. 2.4 zeigt einen Schnittlinienverlauf durch die Mittelachse des Achsbolzens 230 für die Querführungsrolle 242, entlang dem Schnittlinienverlauf A-A aus Abb. 2.3. Abb. 2.5 zeigt einen zusätzlichen Querschnitt, der dem Schnittlinienverlauf B-B aus Abb. 2.3 entspricht.

Aus Abb. 2 geht hervor, dass in Umlaufrichtung des Kettengliedes nach vorne und hinten von der Querführungsrolle 242 beabstandet Stege 234, 238 vorgesehen sind. In der Ausführungsform nach Abb. 2 sind die Stege aus Befestigungswinkelstücken 232 und Permanentmagneten gebildet. Die Permanentmagnete weisen ebenfalls eine Fläche auf, an der sich in Zusammenwirken mit der Kettenführung 250, konkret mit dem Grund der Führungsnut 254, ein Luftspalt ausbildet. Die Luftspaltflächen der Stege sind entsprechend mit 236 und 240 bezeichnet. In der Ausführungsform nach Abb. 2 ist es durch die Aufnahme der Permanentmagnete in den Kettengliedern nicht mehr notwendig, Magnetpakete in der Kettenführung vorzusehen. Dennoch bildet sich über eine erhebliche Länge des Kettengliedes ein kontrollierter Luftspalt zwischen den Stegen 234, 238 einerseits und dem Grund der Führungsnut 254 andererseits aus. Die Luftspaltflächen verlaufen parallel zur Ebene, die von den Laufrollen aufgespannt wird, und sind von dieser Ebene nach unten, d.h. von der Werkstückauflage 22 weg beabstandet. Der Abstand der Luftspaltflächen 236, 240 zum Grund der Führungsnut 254 gibt den Luftspalt vor, der bevorzugt ca. 1,5 mm und weiter bevorzugt 1,4 mm beträgt.

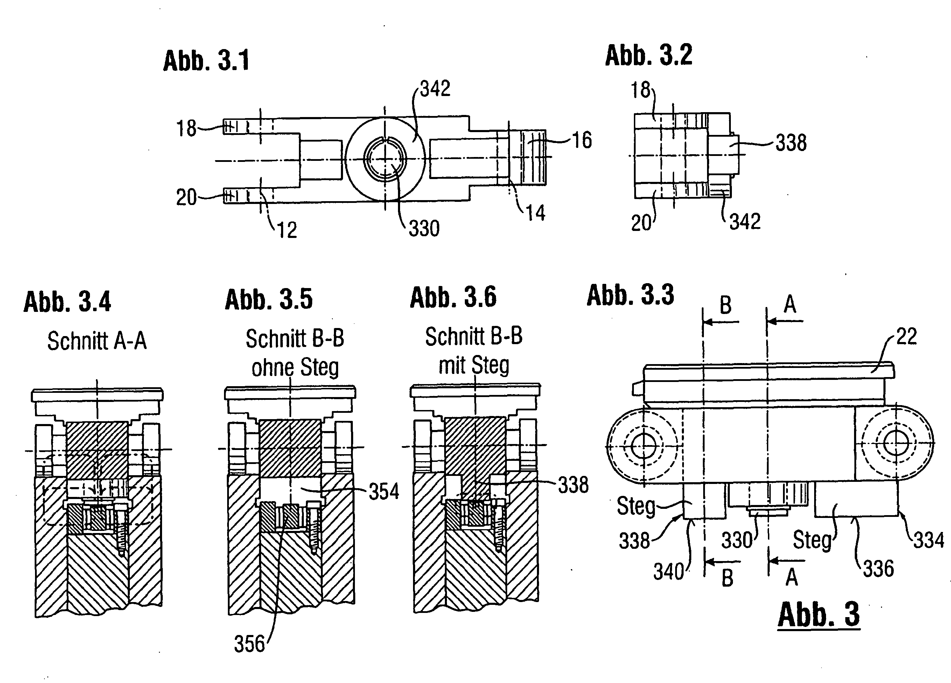

Ähnliche Stege sind in der dritten Ausführungsform nach Abb. 3 verwirklicht, wobei die Ansichten nach Abb. 3.1, 3.2 und 3.3 den entsprechend nummerierten Ansichten in den Abb. 1 und 2 entsprechen. Abb. 3.4 zeigt einen Querschnitt durch die Mittelachse eines Achsbolzenstummels 330 für eine Querführungsrolle gemäß dem Schnittlinienverlauf A-A gemäß Abb. 3.3. Die Abb. 3.5 und 3.6 zeigen einen Vergleich des Querschnitts entlang der Schnittlinie B-B aus Abschnitten 3.3 einmal mit und einmal ohne die Stege 334 und 338.

Aus dem im Folgenden beschriebenen Vergleich der Abb. 3.4, 3.5 und 3.6 geht hervor, wie das Bereitstellen der Stege 234, 238 die Ausbildung des Magnetkreises positiv beeinflusst. Der Vergleich ist anhand der Ausführungsform nach Abb. 3 angestellt, trifft aber auch für die übrigen Ausführungsformen zu.

Wie Abb. 3.4 zeigt, kann ohne die Stege 234, 238 nicht klar vorhergesagt werden, ob der Magnetkreis sich über die linienförmige Berührung zwischen Querführungsrolle 342 und Führungsbahnen 352, und/oder über die Stirnfläche des Achsbolzens 330 schließen wird, der hier lediglich als Vorsprung am Kettenglied ausgebildet ist. Die beiden möglichen Magnetkreislinien sind in Abb. 3.4 dargestellt. Sie haben gemeinsam, dass der Magnetkreis sich über einen divergierenden Luftspalt schließen muss, der an der linienförmigen Berührung zwischen Rolle und ihrer Anlagefläche bzw. am Außenumfang der Achsbolzenstirnfläche am engsten ist. Diese Luftspaltform hat Sättigungsverluste zur Folge.

Aus Abb. 3.5 geht hervor, dass auch in Umlaufrichtung des Kettengliedes ein erheblicher Längenbereich des Kettengliedes, nämlich dort, wo keine Stege vorgesehen sind, einen Freiraum zwischen dem Kettenglied und den Magnetpaketen 356 aufweist, der zu groß ist, um den Magnetkreis zu schließen. Dieser Bereich bleibt für das Schließen des Magnetkreises ungenutzt, während das Kettenglied im Betrieb an den Magnetpaketen vorbei läuft.

Abb. 3.6 zeigt, dass das Auffüllen dieser Längenbereiche mit den Stegen 334, 338 das Schließen der Magnetkreise über die Luftspaltflächen 336, 340 verwirklicht und somit die wirksame Länge, über die die Magnetpakete 56 jedes einzelne Kettenglied führen können, vergrößert. Auch kann der Luftspalt flächig, eng und parallel ausgebildet werden, was Sättigungsverluste reduziert. Die zur Ausbildung der Stege 334, 338 vorgesehenen Werkstoffe und die Abmessungen des Luftspalts entsprechen denen der ersten Ausführungsform.

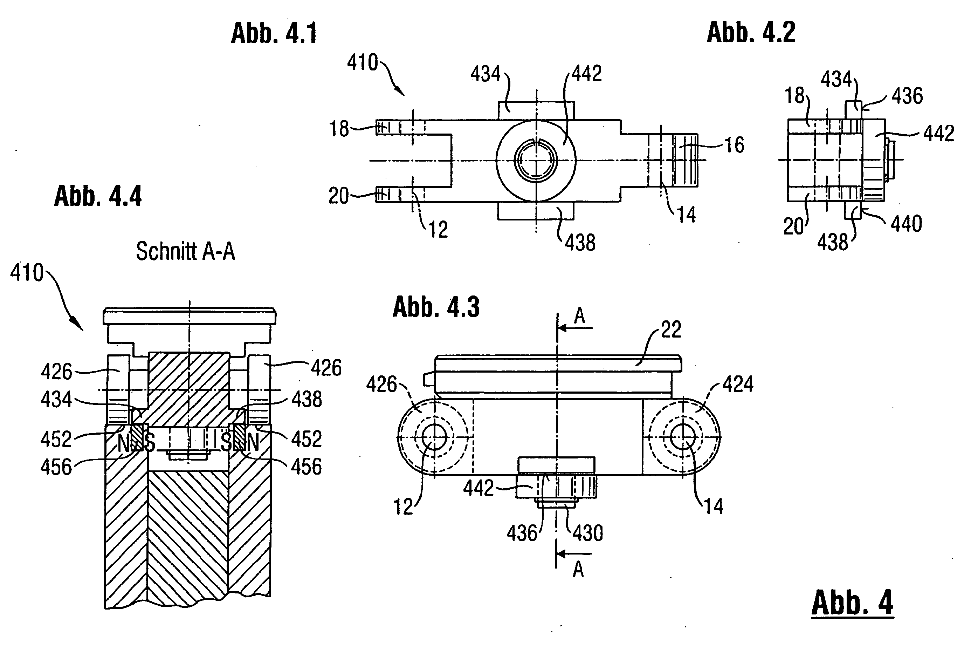

Auch in der vierten Ausführungsform entsprechen die Ansichten der Abb. 4.1, 4.2 und 4.3 denjenigen der entsprechend nummerierten aus den vorherigen Ausführungsformen. Die vierte Ausführungsform verdeutlicht besonders, dass die Magnetführungsfunktion für die Kettenglieder sich auch verwirklichen lässt, wenn die Magnetpakete 456 in den Führungsbahnen 452 der Kettenführung 450 integriert werden (siehe Abb. 4.4). Abb. 4.4 gibt die Polarität an, wobei die Pole mit "N" für Nord und "S" für Süd gekennzeichnet sind.

Um in dieser Ausführungsform einen kontrollierbaren Luftspalt zu erzielen, sind oberhalb des Achsbolzens 430 und seitlich der Querführungsrolle 442 Stege 434, 438 vorgesehen. Für einen engen Luftspalt bei bündig mit den Führungsbahnen 452 abschließenden Magnetpaketen 456 schließen auch die Stege 434, 438 bevorzugt nahezu bündig mit dem Außenumfang der Laufrollen 424, 426 ab. Die konkrete Anordnung und Ausgestaltung der Stege wird aber von der Ausgestaltung der Kettenführung 450 abhängen. Sofern nämlich die Magnetpakete 456 relativ zu den Führungsbahnen 452 nach oben oder unten versetzt angeordnet sind, werden auch die Stege 434, 438 entsprechend nach oben oder unten versetzt ausgebildet sein. Ungeachtet der genauen Lage dieser Stege 434, 438 relativ zu der oberen Fläche der Magnetpakete 456 sind an ihnen aber Luftspaltflächen 436, 440 gebildet, wie aus der Abbildung hervorgeht. In der Ausführungsform nach Abb. 4 sind die Stege 434, 438 als seitliche Vorsprünge am Körper des Kettengliedes 410 im Bereich der Querführungsrolle 442 ausgebildet, eine größere Längenerstreckung der Stege oder ihr Anbringen an einem anderen Längenbereich der Kettenglieder ist aber möglich.

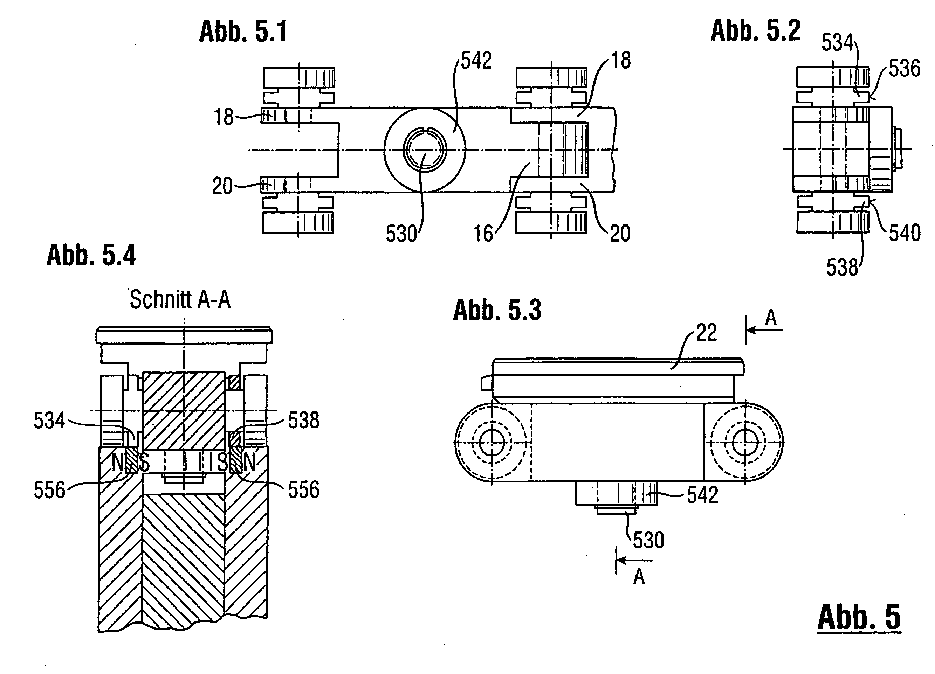

Die Ausführungsform nach Abb. 5, insbesondere Abb. 5.4, zeigt Varianten des Prinzips der Ausführungsform nach Abb. 4, die aber nicht Teil der hier beanspruchten Erfindung sind. Die Abb. 5.1, 5.2 und 5.3 entsprechen in ihren Ansichten den Ansichten der entsprechend nummerierten Ansichten der vorherigen Ausführungsformen, so dass auf eine detaillierte Beschreibung verzichtet wird.

Abb. 5.4 zeigt eine Schnittansicht gemäß dem Schnittlinienverlauf A-A aus Abb. 5.3, wobei im Unterschied zu den vorherigen Ausführungsformen der Schnittlinienverlauf versetzt ist.

In Abb. 5.4 sind zwei verschiedene Ausführungsvarianten dargestellt, eine links der Mittelsenkrechten, eine rechts der Mittelsenkrechten. Beide Ausführungsformen haben mit der vierten Ausführungsform nach Abb. 4 und miteinander gemeinsam, dass Stege 534, 538 ausgebildet werden. In der fünften Ausführungsform nach Abb. 5 sind die Stege allerdings nicht der Querführungsrolle 542 benachbart angeordnet, sondern von dieser in Laufrichtung des Kettengliedes beabstandet. In der fünften Ausführungsform werden die Achsen für die Laufrollen 524, 526 genutzt, um hier entweder eine Achsbolzenaufweitung 534 oder einen Achsbolzenaufsatz 538 vorzusehen. Sowohl an der Achsbolzenaufweitung 534 als auch an dem Achsbolzenaufsatz 538 sind entsprechend Luftspaltflächen 536, 540 bereitgestellt, die in ihrer technischen Wirkung vergleichbar sind zu den Luftspaltflächen nach der Ausführungsform gemäß Abb. 4.

Die Achsbolzenaufweitung 534 ist einstückig mit dem Träger für die Laufrolle auf der Seite der Achsbolzenaufweitung 534 ausgebildet. Der Achsbolzenaufsatz 538 hingegen ist als getrenntes Bauteil vorgesehen und wird über beispielsweise eine Keilverbindung drehfest auf dem Träger für die Laufrolle auf seiner Seite befestigt. Das Vorsehen einer Achsbolzenaufweitung 534 und eines Achsbolzenaufsatzes 538 auf derselben Achse bietet sich an, um die Achse montieren zu können. So kann die Achse mit der Achsbolzenaufweitung 534 auf einer Seite eingesteckt werden, um dann auf dem durchgesteckten Ende der Achse den Achsbolzenaufsatz 538 zu montieren. Es ist allerdings ebenfalls denkbar, auf beiden Seiten einen Achsbolzenaufsatz 538 oder eine Achsbolzenaufweitung 534 vorzusehen, wenn es sich nicht um eine Steckachse handelt.

Die zur Ausbildung der Achsbolzenaufweitung 534 und des Achsbolzenaufsatzes 538 vorgesehenen Werkstoffe und die Abmessungen des Luftspalts entsprechen denen der vierten Ausführungsform.

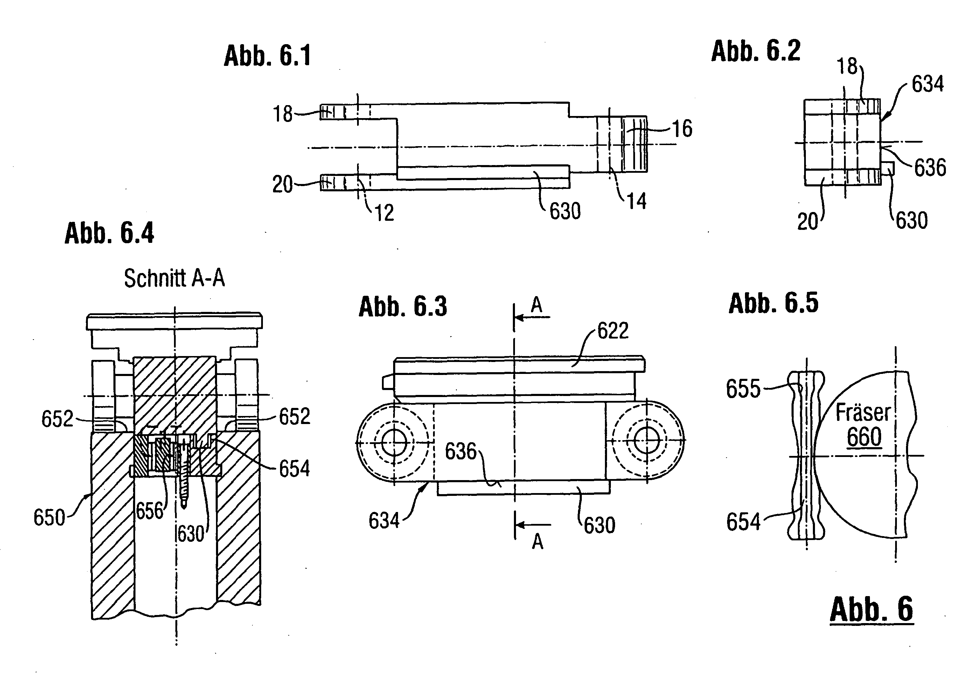

Eine weitere Ausführungsform ist in Abb. 6 dargestellt, wobei wiederum die Ansichten nach den Abb. 6.1, 6.2 und 6.3 den entsprechend nummerierten Ansichten der vorherigen Ausführungsform entsprechen.

Aus der Ausführungsform nach Abb. 6 geht hervor, dass diese ohne Querführungsrolle ausgebildet ist. Anstelle der Querführungsrolle aus den vorhergehenden Ausführungsformen wird in der Ausführungsform nach Abb. 6 die Querführungsfunktion von einem Führungsschwert 630 verwirklicht. Dies ermöglicht es, die Kettenführung 650 mit Führungsbahnen 652 aber ohne die durchgehende, breite Führungsnut für eine Querführungsrolle auszubilden. Dies wiederum ermöglicht es, den Mittenbereich der Kettenführung als Abrollfläche für eine Führungsrolle zu verwenden, wodurch der Einsatz von Kettengliedern mit z.B. nur drei Führungsrollen eröffnet wird.

Anstelle einer Führungsnut für eine Querführungsrolle ist in der Kettenführung 650 nur bereichsweise, nämlich in den Bereichen der Bearbeitungswerkzeuge und Bearbeitungsaggregate eine Führungsnut 654 vorgesehen, in die das Führungsschwert 630 eingreift. Obgleich es grundsätzlich auch möglich ist, die Führungsnut 654 über die gesamte Länge der Kettenführung 650 vorzusehen, ist dies nicht erforderlich, denn eine Querführung der Kette ist hauptsächlich dort erforderlich, wo beispielsweise von Bearbeitungswerkzeugen oder -aggregaten eine Querkraft auf das Werkstück und somit die Kette aufgebracht wird. Um mögliche Verluste durch Reibung des Führungsschwerts an der Führungsnut zu reduzieren, ist nach der vorliegenden Ausführungsform das Schwert fest stehend aber die Längserstreckung der Führungsnut 654 nur auf diesen Bereich der Bearbeitungswerkzeuge bzw. -aggregate beschränkt. Es wäre aber ebenso denkbar, das Führungsschwert bewegbar zu gestalten, so dass es nur in den für eine Querführung kritischen Bereichen in Eingriff mit einer Führungsnut oder ähnlichem bewegt wird.

Ein für eine Querführung kritischer Bereich ist in Abb. 6.5 durch ein schematisch bei 660 gezeigtes Bearbeitungswerkzeug angedeutet. Die Führungsnut 654 ist nur in dem Bereich des Bearbeitungswerkzeugs 660 vorgesehen. Um den Eingriff des Führungsschwerts 630 in die Führungsnut 654 zu erleichtern, ist vor dem Bearbeitungswerkzeug 660 eine Verjüngung 655 für den Einlauf des Führungsschwerts 630 vorgesehen. Eine entsprechende Erweiterung für den Auslauf oder für den Einlauf bei Umkehr der Bewegungsrichtung der Kette ist Abb. 6.5 ebenfalls entnehmbar.

Die rollenlose Querführung ermöglicht es, den Boden des Kettengliedes so zu gestalten, dass sich hier der Magnetkreis unter Ausbildung eines geringen, flächigen und parallelen Luftspalts schließen kann. Abb. 6.4 gibt die entsprechend vorgesehenen Magnetpakete 656 wieder. Mit 634 ist der Boden des Kettengliedes bezeichnet, an dem sich eine Luftspaltfläche 636 ausbildet. Die Werkstoffe für den Boden 634 und die Abmessungen des Luftspalts entsprechen denen der vierten oder fünften Ausführungsformen.

Wie schon in den vorherigen Ausführungsformen ist es auch in der sechsten Ausführungsform möglich, die vertikale Lage des Kettengliedbodens 634 an die Formgebung der Kettenführung anzupassen. Bevorzugt ist es, wenn die Kettenführung 650 oben plan ist, d.h. dass die Oberseite der Magnetpakete 656 mit den Führungsbahnen 652 abschließt. In diesem Fall kann entsprechend der Boden 634 des Kettengliedes und mit ihm die Luftspaltfläche 636 von dem Berührungspunkt der Laufrollen geringfügig in Richtung der Werkstückauflage 622 beabstandet werden. Die Beabstandung gibt den Luftspalt vor, der sich dann mit der Oberseite der Magnetpakete 656 bildet. Wenn entsprechend die Oberseite der Magnetpakete 656 gegenüber den Führungsbahnen 652 nach unten versetzt ist, kann der Boden 634 relativ um den gleichen Betrag versetzt werden. Durch eine Anpassung der Kettenglieder an diese Ausgestaltung der Kettenführung 650 ist somit die wiederholbare Verwirklichung eines gleichmäßigen, flächigen und parallelen Luftspalts gewährleistet.

Wie aus der Beschreibung der bevorzugten Ausführungsformen ersichtlich ist, können die einzelnen Ausführungsformen auch miteinander kombiniert werden. So ist es beispielsweise möglich, die Ausführungsformen nach den Abb. 4 und 5 auch mit einer rollenlosen Querführung auszubilden. Auch in den Ausführungsformen nach den Abb. 4 und 5 könnte so das unter Bezugnahme auf die Ausführungsform nach Abb. 6 beschriebene Querführungsschwert verwirklicht sein, denn die in den Ausführungsformen nach den Abb. 4 und 5 vorgesehenen Stege lassen ausreichend Platz, um anstelle der Querführungsrolle ein Schwert vorzusehen.

Schließlich ist es anstelle des sich seitlich verjüngenden Einlaufs in die Querführungsnut 654 nach der sechsten Ausführungsform auch möglich, den Einlauf alternativ oder zusätzlich von unten nach oben zu gestalten.

## Patentansprüche

1. Kettenglied (10) für eine umlaufende Transportkette einer Werkzeugmaschine, umfassend:
a1. ein Paar Laufrollen (24), die über ihre Abwälzrichtung die Umlaufrichtung des Kettengliedes bestimmen,
b1. oberhalb der Laufrollen (24) eine Werkstückauflage (22); und
c1. bei Befestigung an einem benachbarten Kettenglied eine weitere Laufrolle (26), die
i. in Umlaufrichtung des Kettengliedes von dem Laufrollenpaar (24) beabstandet ist und
ii. über ihre Abwälzung mit dem Laufrollenpaar (24) eine Ebene aufspannt; sowie
d1. eine Querführung (630), die
i. das Kettenglied quer zu seiner Umlaufrichtung führt und
ii. quer zur Umlaufrichtung des Kettengliedes und in Umlaufrichtung betrachtet zwischen dem Laufrollenpaar (24) rollenfrei ist; wobei
e1. in Umlaufrichtung betrachtet zwischen dem Laufrollenpaar (24) und der Laufrolle (26) ein ferromagnetischer Werkstoff vorgesehen ist, der
i. eine Fläche (636) am Boden (634) des Kettenglieds bildet, die
ii. im Wesentlichen parallel zu der durch die Laufrollen (24, 26) aufgespannten Ebene und
iii. von dieser Ebene derart in Richtung der Werkstückauflage (22) beabstandet ist, dass sich im Betrieb der Transportkette an dieser Fläche (636) ein flächiger Luftspalt bildet.

2. Kettenglied nach Anspruch 1, **dadurch gekennzeichnet, dass** die Querführung als Führungsschwert (630) ausgebildet ist.

3. Kettenglied nach Anspruch 1 oder 2, **dadurch gekennzeichnet, dass** das Führungsschwert (630) von der durch die Laufrollen (24, 26) aufgespannten Ebene aus von der Werkstückauflage (22) weg vorsteht.

4. Kettenglied für eine umlaufende Transportkette einer Werkzeugmaschine, umfassend:
a2. ein Paar Laufrollen (24), die über ihre Abwälzrichtung die Umlaufrichtung des Kettengliedes bestimmen,
b2. oberhalb der Laufrollen (24) eine Werkstückauflage (22); und
c2. bei Befestigung an einem benachbarten Kettenglied ein weiteres Paar Laufrollen (26), die
i. in Umlaufrichtung des Kettengliedes von dem ersten Laufrollenpaar (24) beabstandet sind; sowie
d2. eine Querführungsrolle (42, 242, 342, 442,), die
i. an ihrem Außenumfang das Kettenglied quer zu seiner Umlaufrichtung führt und
ii. auf einem Achsbolzen (30, 230, 330, 430) gelagert ist, der sich quer zur Umlaufrichtung des Kettengliedes zwischen den Laufrollen der Laufrollenpaare (24 ,26) befindet; wobei
e2. in Umlaufrichtung betrachtet zwischen den Laufrollenpaaren (24, 26) ein ferromagnetischer Werkstoff vorgesehen ist, der
i. eine Fläche (40, 240, 340, 440) bildet, die
ii. von der Stirnfläche des Achsbolzens entfernt,
iii. im Wesentlichen parallel zu der durch die Laufrollen (24, 26) aufgespannten Ebene und
iv. von dieser Ebene derart beabstandet ist, dass sich im Betrieb der Transportkette an dieser Fläche (40, 240, 340, 440) ein flächiger Luftspalt bildet.

5. Kettenglied nach Anspruch 4, **dadurch gekennzeichnet, dass** der ferromagnetische Werkstoff als quaderförmiger Block ausgebildet ist, der in Umlaufrichtung des Kettenglieds von der Querführungsrolle (42, 242, 342, 442) beabstandet ist.

6. Kettenglied nach Anspruch 4 und 5, **dadurch gekennzeichnet, dass** zwei quaderförmige Blöcke vorgesehen sind, die in Umlaufrichtung betrachtet in entgegen gesetzte Richtungen von der Querführungsrolle beabstandet sind.

7. Kettenglied nach Anspruch 4, **dadurch gekennzeichnet, dass** die Fläche (40, 240, 340, 440) von der durch die Laufrollen (24, 26) aufgespannten Ebene in Richtung der Werkstückauflage (22) beabstandet ist.

8. Kettenglied nach einem der Ansprüche 1 bis 7, **dadurch gekennzeichnet, dass** der ferromagnetische Werkstoff eine Achse oder einen Achsbolzen bzw. eine Welle für die Laufrollen (24, 26) umgibt und an ihnen befestigt ist.

9. Kettenglied nach Anspruch 4 und einem der Ansprüche 5 bis 8, **dadurch gekennzeichnet, dass** der ferromagnetische Werkstoff den Achsbolzen (30, 230, 330, 430) für die Querführungsrolle umgibt.

10. Kettenglied nach Anspruch 9, **dadurch gekennzeichnet, dass** der ferromagnetische Werkstoff so geformt ist, dass er eine weitere Fläche (38) bildet, die im Wesentlichen rechtwinklig zu der durch die Laufrollen (24, 26) aufgespannten Ebene und im Wesentlichen parallel zur Umlaufrichtung des Kettenglieds verläuft, sowie vom Außenumfang der Querführungsrolle derart zum Achsbolzen für die Querführungsrolle beabstandet ist, dass sich im Betrieb der Transportkette dort ein flächiger Luftspalt bildet.

11. Kettenglied nach Anspruch 10, **dadurch gekennzeichnet, dass** es zwei im Wesentlichen rechtwinklig zu der durch die Laufrollen (24, 26) aufgespannten Ebene und im Wesentlichen parallel zur Umlaufrichtung des Kettenglieds verlaufende und Luftspalte bildende Flächen aufweist.

12. Durchlaufmaschine mit einer, bevorzugt zwei aus Kettengliedern nach mindestens einem der vorhergehenden Ansprüche gebildeten Führungsketten als umlaufender Werkstückauflage.

13. Durchlaufmaschine nach Anspruch 12, sofern abhängig von Anspruch 1, **dadurch gekennzeichnet, dass** die Auflage für die Führungsketten im Wesentlichen eben, ohne Nut für eine Querführungsrolle ist.

14. Durchlaufmaschine nach Anspruch 13, **dadurch gekennzeichnet, dass** die Auflage für die Führungsketten zumindest bereichsweise eine Nut für ein Führungsschwert aufweist.

15. Durchlaufmaschine nach Anspruch 14, **dadurch gekennzeichnet, dass** die Nut für ein Führungsschwert sich im Bereich von Bearbeitungswerkzeugen verengt.

16. Durchlaufmaschine nach einem der Ansprüche 12 bis 15, sofern abhängig von Anspruch 1, **dadurch gekennzeichnet, dass** in der Auflage für die Führungsketten Magnete aufgenommen sind, die mit der Auflage im Wesentlichen bündig abschließen.

17. Durchlaufmaschine nach einem der Ansprüche 12 bis 15, sofern abhängig von Anspruch 4, **dadurch gekennzeichnet, dass** die Auflage für die Führungsketten eine Nut für die Querführungsrolle aufweist, an deren Grund Magneten angeordnet sind.

18. Durchlaufmaschine nach einem der Ansprüche 12 bis 17, **dadurch gekennzeichnet, dass** sie ein Doppelendprofiler mit zwei aus Kettengliedern nach mindestens einem der Ansprüche 1 bis 11 gebildeten Führungsketten ist.

## Claims

1. Chain link (10) for a rotating transport chain of a machine tool comprising:
a1. a pair of rollers (24) which determine the direction of rotation of the chain link via their rolling direction,
b1. above the rollers (24) a workpiece support (22); and
c1. during attachment to an adjacent chain link, a further roller (26) which
i. is spaced from the roller pair (24) in direction of rotation of the chain link and
ii. fixes a plane via its rolling with the roller pair (24); and
d1. a transverse guide (630) which guides
i. the chain link transversely to its direction of rotation and
ii. is roller-free transversely to the direction of rotation of the chain link and observed in direction of rotation between the roller pair (24); wherein
e1. observed in direction of rotation between the roller pair (24) and the roller (26), a ferromagnetic material is provided which forms
i. a surface (636) on the base (634) of the chain link, which
ii. is essentially parallel to the plane fixed by the rollers (24, 26) and
iii. is spaced from this plane in the direction of the workpiece support (22) such that in operation of the transport chain, a laminar air gap is formed at this surface (636).

2. Chain link according to claim 1, **characterised in that** the transverse guide is designed as a guiding sword (630).

3. Chain link according to claim 1 or 2, **characterised in that** the guiding sword (630) starting from the plane fixed by the rollers (24, 26) projects away from the workpiece support (22).

4. Chain link for a rotating transport chain of a machine tool comprising:
a2. a pair of rollers (24) which determine the direction of rotation of the chain link via their rolling direction,
b2. above the rollers (24) a workpiece support (22); and
c2. during attachment to an adjacent chain link, a further pair of rollers (26) which
i. are spaced from the first roller pair (24) in direction of rotation of the chain link; and
d2. a transverse guide roller (42, 242, 342, 442) which guides
i. the chain link transversely to its direction of rotation at its outer periphery and
iii. is mounted on a king pin (30, 230, 330, 430), which is located transversely to the direction of rotation of the chain link between the rollers of the roller pair (24, 26); wherein
e2. observed in direction of rotation between the roller pair (24, 26), a ferromagnetic material is provided which forms
i. a surface (40, 240, 340, 440) which
ii. is remote from the end-face surface of the king pin,
iii. is essentially parallel to the plane fixed by the rollers (24, 26) and
iv. is spaced from this plane such that in operation of the transport chain, a laminar air gap is formed at this surface (40, 240, 340, 440).

5. Chain link according to claim 4, **characterised in that** the ferromagnetic material is designed as a cuboid block which is spaced from the transverse guide roller (42, 242, 342, 442) in direction of rotation of the chain link.

6. Chain link according to claim 4 and 5, **characterised in that** two cuboid blocks are provided which, observed in direction of rotation, are spaced from the transverse guide roller in opposite directions.

7. Chain link according to claim 4, **characterised in that** the surface (40, 240, 340, 440) is spaced from the plane fixed by the rollers (24, 26) in the direction of the workpiece support (22).

8. Chain link according to one of claims 1 to 7, **characterised in that** the ferromagnetic material surrounds an axle or a king pin or a shaft for the rollers (24, 26) and is attached to them.

9. Chain link according to claim 4 and one of claims 5 to 8, **characterised in that** the ferromagnetic material surrounds the king pin (30, 230, 330, 430) for the transverse guide roller.

10. Chain link according to claim 9, **characterised in that** the ferromagnetic material is shaped so that it forms a further surface (38) which runs essentially at right-angles to the plane fixed by the rollers (24, 26) and essentially parallel to the direction of rotation of the chain link, and is spaced from the outer periphery of the transverse guide roller to the king pin for the transverse guide roller such that in operation of the transport chain, a laminar air gap is formed there.

11. Chain link according to claim 10, **characterised in that** it has two surfaces running essentially at right-angles to the plane fixed by the rollers (24, 26) and essentially parallel to the direction of rotation of the chain link and forming air gaps.

12. Continuous machine having one, preferably two, guide chains formed from chain links according to at least one of the preceding claims as rotating workpiece support.

13. Continuous machine according to claim 12, provided dependent on claim 1, **characterised in that** the support for the guide chains is essentially flat without groove for a transverse guide roller.

14. Continuous machine according to claim 13, **characterised in that** the support for the guide chains has at least in some regions a groove for a guiding sword.

15. Continuous machine according to claim 14, **characterised in that** the groove for a guiding sword is narrowed in the region of machining tools.

16. Continuous machine according to one of claims 12 to 15, provided dependent on claim 1, **characterised in that** magnets which close essentially flush with the support are accommodated in the support for the guide chains.

17. Continuous machine according to one of claims 12 to 15, provided dependent on claim 4, **characterised in that** the support for the guide chains has a groove for the transverse guide roller, on the base of which magnets are arranged.

18. Continuous machine according to one of claims 12 to 17, **characterised in that** it is a double-end profiler with two guide chains formed from chain links according to at least one of claims 1 to 11.

## Revendications

1. Maillon (10) pour une chaîne de transport en circulation d'une machine-outil, comprenant :
a1. une paire de galets de roulement (24), déterminant, par leur direction de roulement, la direction de circulation du maillon ;
b1. un reposoir à pièces d'oeuvre (22) disposé au-dessus des galets de roulement (24) ; et
c1. en cas de fixation à un maillon voisin, un autre galet de roulement (26), qui
i. est espacé de la paire de galets de roulement (24), dans la direction de circulation du maillon, et
ii. par son roulement, définit un plan avec la paire de galets de roulement (24) ; ainsi qu'
d1. Un guidage transversal (630), qui
i. guide le maillon transversalement à sa direction de circulation, et
ii. est sans galet entre la paire de galets de roulement (24), en observant transversalement à la direction de circulation du maillon et dans la direction de circulation ; où
e1. entre la paire de galets de roulement (24) et le galet de roulement (26), en observant dans la direction de circulation, est prévu un matériau ferromagnétique, qui,
i. au fond (634) du maillon, forme une face (636),
ii. qui est espacée sensiblement parallèlement au plan défini par les galets de roulement (24, 26), et
iii. qui est espacée de ce plan, en direction du reposoir à pièces d'oeuvre (22), de manière qu'un entrefer plat se forme sur cette face (636) lorsque la chaîne de transport est en fonctionnement.

2. Maillon selon la revendication 1, **caractérisé en ce que** le guidage transversal est réalisé sous forme de lame de guidage (630).

3. Maillon selon la revendication 1 ou 2, **caractérisé en ce que** la lame de guidage (630) fait saillie du reposoir à pièces d'oeuvre (22) en s'écartant du plan défini par les galets de roulement (24, 26).

4. Maillon (10) pour une chaîne de transport en circulation d'une machine-outil, comprenant :
a2. une paire de galets de roulement (24), déterminant, par leur direction de roulement, la direction de circulation du maillon ;
b2. un reposoir à pièces d'oeuvre (22) disposé au-dessus des galets de roulement (24) ; et
c2. en cas de fixation à un maillon voisin, une autre paire de galets de roulement (26), qui
i. sont espacés de la première paire de galets de roulement (24), dans la direction de circulation du maillon ; et
d2. Un galet de guidage transversal (42, 242, 342, 442), qui,
i. sur sa périphérie extérieure, guide le maillon transversalement à sa direction de circulation, et
ii. est monté en palier sur un boulon d'axe (30, 230, 330, 430) se trouvant entre les galets de roulement de la paire de galets de roulement (24, 26), transversalement à la direction de circulation du maillon ; où
e2. entre les paires de galets de roulement (24, 26), en observant dans la direction de circulation, est prévu un matériau ferromagnétique, qui
i. forme une face (40, 240, 340, 440),
ii. qui est espacé de la face frontale du boulon d'axe,
iii. qui est espacé, sensiblement parallèlement au plan défini par les galets de roulement (24, 26), et
iv. est espacé de ce plan, de manière qu'un entrefer plat se forme sur cette face (40, 240, 340, 440) lorsque la chaîne de transport est en fonctionnement.

5. Maillon selon la revendication 4, **caractérisé en ce que** le matériau ferromagnétique est réalisé sous forme de bloc parallélépipédique, espacé du galet de guidage transversal (42, 242, 342, 44) dans la direction de circulation du maillon.

6. Maillon selon les revendications 4 et 5, **caractérisé en ce que** sont prévus deux blocs parallélépipédiques, espacés du galet de guidage transversal dans des sens opposés, en observant dans la direction de circulation du maillon.

7. Maillon selon la revendication 4, **caractérisé en ce que** la face (40, 240, 340, 440) est espacée du plan défini par les galets de roulement (24, 26), dans la direction du reposoir à pièces d'oeuvre (22).

8. Maillon selon l'une des revendications 1 à 7, **caractérisé en ce que** le matériau ferromagnétique entoure un axe ou un boulon d'axe, respectivement un arbre pour les galets de roulement (24, 26), et est fixé sur eux.

9. Maillon selon la revendication 4 et l'une des revendications 5 à 8, **caractérisé en ce que** le matériau ferromagnétique entoure le boulon d'axe (30, 230, 330, 430) pour le galet de guidage transversal.

10. Maillon selon la revendication 9, **caractérisé en ce que** le matériau ferromagnétique est formé de manière qu'il forme une autre face (38), s'étendant sensiblement à angle droit par rapport au plan défini par les galets de roulement (24, 26) et sensiblement parallèlement à la direction de circulation du maillon, et est espacé de la périphérie extérieure du galet de guidage transversal, par rapport au boulon d'axe pour le galet de guidage transversal, de manière qu'un entrefer plat se forme à cet endroit, lorsque la chaîne de transport est en fonctionnement.

11. Maillon selon la revendication 10, **caractérisé en ce qu'**il présente deux faces, s'étendant sensiblement à angle droit par rapport au plan défini par les galets de roulement (24, 26) et sensiblement parallèlement à la direction de circulation du maillon et formant des entrefers.

12. Machine de type continu, avec un, de préférence deux, chaînes de guidage, formées de maillons selon au moins l'une des revendications précédentes, faisant office de reposoir à pièces d'oeuvre circulant.

13. Machine de type continu selon la revendication 12, dans la mesure où elle dépend de la revendication 1, **caractérisée en ce que** le reposoir pour les chaînes de guidage est sensiblement plan, sans rainure pour un galet de guidage transversal.

14. Machine de type continu selon la revendication 13, **caractérisée en ce que** le reposoir pour les chaînes de guidage présente, au moins par zones, une rainure pour une lame de guidage.

15. Machine de type continu selon la revendication 14, **caractérisée en ce que** la rainure pour une lame de guidage va en rétrécissant dans la zone des outils d'usinage.

16. Machine de type continu selon l'une des revendications 12 à 15 tant que dépendante de la revendication 1, **caractérisée en ce que** dans le reposoir pour les chaînes de guidage sont logés des aimants, se délimitant de manière sensiblement affleurée avec le reposoir.

17. Machine de type continu selon l'une des revendications 12 à 15 tant que dépendante de la revendication 4, **caractérisée en ce que** le reposoir pour les chaînes de guidage présente une rainure pour le galet de guidage transversal, au fond de laquelle sont disposés des aimants.

18. Machine de type continu selon l'une des revendications 12 à 17, **caractérisée en ce qu'**elle est une machine à profiler à deux bouts, comprenant deux chaînes de guidage composées de maillons selon au moins l'une des revendications 1 à 11.
